# EUROPEAN PATENT SPECIFICATION

(11) **EP 1 631 033 B1**
(45) Date of publication and mention of the grant of the patent: **21.02.2007**
(21) Application number: 04104178.1
(22) Date of filing: 31.08.2004
(51) Int. Cl.: H04L 29/06, H04L 12/28

(54) **System and Method for Handling Simple IP to Mobile IP Transition**
System und Verfahren zur Behandlung der Übergang von IP zu Mobile IP
Système et procédé pour le traitement de la transition de IP a Mobile IP

(43) Date of publication of application: 01.03.2006
(73) Proprietor: Research In Motion Limited, Waterloo, Ontario N2L 3W8 (CA)
(72) Inventor: Islam, Khaledul, Kanata, Ontario K2K 3N4 (CA); Kim, Jin, Ottawa, Ontaria K1Y 4S3 (CA); Xue, Hao, Ottawa, Ontario K2C 2C7 (CA)
(74) Representative: Rickard, David John

(56) References cited:
- US-A1- 2004 087 304
- SUNG KIM: "SK Telecom's IP Packet Core Network Overview: Its past, present and future" SK TELECOM, 2001, pages 1-45, XP002341643
- SPIRENT COMMUNICATIONS: "CDMA Applications Performance Test Platform APEX C2K" SPIRENT, May 2004 (2004-05), pages 1-4, XP002341644
- KELKAR R ET AL: "Mobile IP in 3G CDMA networks" PERSONAL WIRELESS COMMUNICATIONS, 2002 IEEE INTERNATIONAL CONFERENCE ON DEC. 15-17, 2002, PISCATAWAY, NJ, USA,IEEE, 15 December 2002 (2002-12-15), pages 41-44, XP010630748 ISBN: 0-7803-7569-6
- DATABASE WPI Section EI, Week 200416 Derwent Publications Ltd., London, GB; Class W01, AN 2002-605894 XP002341694 & KR 399 576 B (KOREA ELECTRONICS & TELECOM RES INST) 26 September 2003 (2003-09-26)

## Description

The application relates to the provision of IP (Internet Protocol) connectivity to wireless devices, and in particular to transitions between simple IP and mobile IP sessions.

### Background

There are two IP modes supported in a cdma2000® wireless IP network. These are the so-called simple IP (SIP) and mobile IP (MIP). Details of CDMA wireless IP are provided in TIA IS-835. The standard is known in Third Generation Partnership Project 2 (3GPP2) as X.S0011. The mobile IP section of the IS-835 standard refers in turn to the Internet Engineering Task Force (IETF) standard named RFC2002. Some cdma2000-based wireless IP networks support both MIP and SIP. Others support only SIP or only MIP. Regardless of the operation mode, the network and the mobile device establish and configure the point-to-point protocol (PPP) as described in RFC1661 to establish a packet data session. An "always-on" mobile device always maintains PPP connectivity even when it does not have radio link layer connectivity to the network. When the device or network does not have any data to send, the packet data service on the mobile device enters a "dormant" state. The PPP connectivity between the network and the device is maintained, but the physical radio connection is torn down in such a state. Note that cdma2000® is a registered trademark of the Telecommunications Industry Association (TIA-USA).

In a SIP-based wireless IP network, mobile devices are assigned geographically dependent IP addresses dynamically by the visited Packet Data Serving Nodes (PDSN). As the mobile device moves it will be assigned a new geographically dependent IP address. If the mobile device supports any "push" applications such as Push e-mail, then it is the responsibility of the mobile device to notify the associated push servers whenever its IP address as assigned by the wireless network changes. In a SIP-based network, mobile devices may not know how long the IP address is assigned for. The PDSN may tear down the PPP session and reassign the IP address to another mobile device if it has not heard from the mobile device upon the expiration of an assigned IP address duration. A PDSN may unilaterally tear down the PPP session if the mobile fails to respond to page messages while out of coverage even if the PPP session time has not expired. This will break push services as the mobile device is no longer associated with the IP address that the push servers are aware of. As a result, "Always-on" mobile devices in a SIP session need to send periodic "keep alive" packets to maintain PPP connectivity.

In a mobile IP network, each mobile device is typically assigned a static IP address by its home agent (HA) which is then maintained by the mobile terminal regardless of its geographical point of attachment. As the mobile moves, it registers with a foreign agent (FA) which provides a care-of-address (COA). The home agent is informed of the mobile device's COA through the registration procedure. The foreign agent maintains a binding of Home IP address to care-of-address. The home agent receives packets for the terminal and forwards these to the foreign agent according to the care-of-address such that the mobile device remains reachable via its geographically-independent IP address. Because of this, a MIP terminal will always be reachable. The network notifies the mobile of the duration of the address and as such the mobile terminal will know the expiry time of assigned address. As long as the mobile device re-registers before this timer expires, the PPP connectivity is maintained.

Mobile IP provides a number of other advantages over simple IP such as multiple user profiles with different user ID/password etc. This allows a single mobile device to have multiple user accounts. The IS-835 standard only states that if a wireless terminal fails to establish a mobile IP session, it should fall back to SIP mode to establish a SIP data session. The standard does not state any mechanism how a "dormant" mobile device in a SIP session can establish a MIP session when it visits a network that supports MIP.

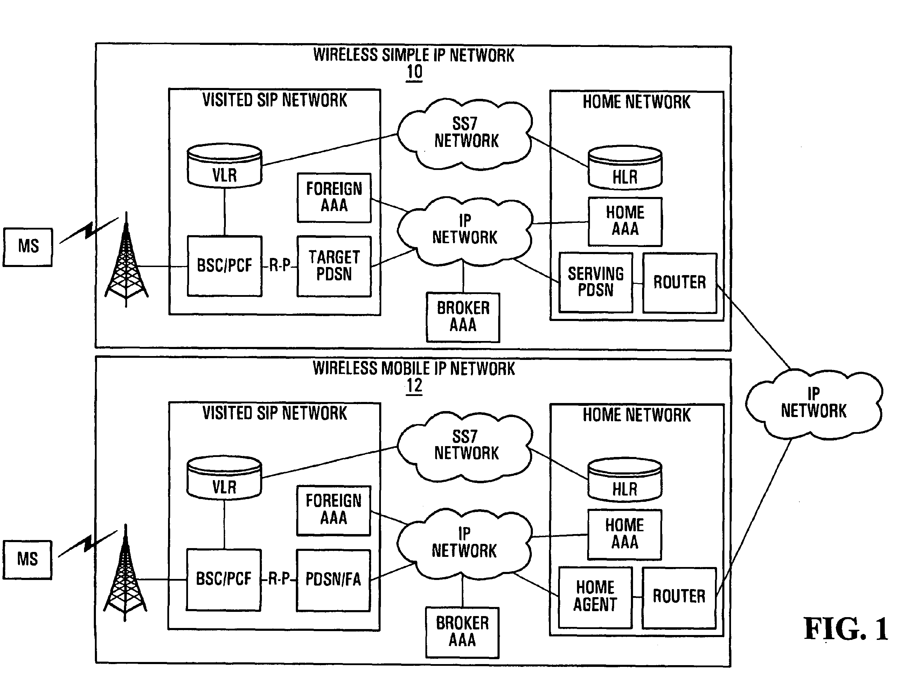

For the purpose of illustration, shown in Figure 1 is an example of a cdma2000 wireless IP network as described in IS-835. There is a wireless simple IP network 10 and a wireless mobile IP network 12.

An IP packet core network overview is provided in Sung Kim: "SK Telecom's IP Packet Core Network Overview, Its past, present and future" KRnet 2001 ("Kim"). Kim teaches that after going dormant using Simple IP service and moving to other area where a user is served by different PDSN, Mobile Station sends previously used IP address which was assigned by previous PDSN. Kim further teaches that the new PDSN recognises it as Mobile IP, because the Mobile Station uses some address which looks like static IP address.

A powerful platform for testing CDMA applications is provided in Spirent Communications: "CDMA Applications Performance Test Platform APEX C2K", v.11 05/2004 ("Apex"). Apex teaches that carriers are aggressively pursuing a transition to Mobile IF (MoIP) on their packet data networks. MoIP facilitates mobility while a user is on a data call on a carrier's network, whether that mobility is across larger geographical areas or across technologies (for example, 1X to 1xEV-00 transitions).

Other prior disclosures include US 2004/0087304 A1, R. Kelkar et alia: "Mobile IP in 3G CDMA Networks", IEEE 2002, and KR2002021825 (Abstract, 2002-605894).

### GENERAL

According to one broad aspect, the application provides a method for transitioning between a first wireless protocol having geographically dependent addressing and a second wireless protocol having non-geographically dependent addressing, the method comprising: a wireless device detecting a new system requiring reconnect of a packet data service while in a state during which link layer connectivity is maintained for a packet data service; at least a first time the wireless device detects the new system, the wireless device attempting to establish a session using the second wireless protocol with the new system and if the session using the second wireless protocol is established, the wireless device terminating use of the first wireless protocol thereby transitioning to the second wireless protocol.

In some embodiments, the method is executed only if the mobile device is in state during which link layer connectivity for a packet data service is maintained and a radio link has been torn down.

In some embodiments, the first and second wireless protocols comprise a first wireless IP protocol and a second wireless IP protocol respectively.

In some embodiments, the first wireless protocol comprises SIP (simple IP) and the second wireless protocol comprises MIP (mobile IP).

In some embodiments, the method further comprises: the wireless device storing MIP support information for each new system detected, the MIP support information indicating whether or not a MIP session was established; upon the wireless device detecting a new system requiring reconnect of a packet data service: a) the wireless device checking to see if MIP support information was previously stored in respect of the new system; b) if there is MIP support information indicating a MIP session was established during a previous visit to the new system, the wireless device attempting to establish a MIP session with the new system; and c) if there is MIP support information indicating a MIP session was not established during a previous visit to the new system, the wireless device attempting to establish a SIP session with the new system.

In some embodiments, the method further comprises, if there is no MIP support information stored for the new system: initiating a SIP reconnect request to establish a SIP session; transmitting an unsolicited agent solicitation; if a MIP agent advertisement is received in response to the unsolicited agent solicitation, terminating the SIP session and initiating a MIP session; and adding a record in respect of the new system to indicate whether or not a MIP session was established.

In some embodiments, the method further comprises: transmitting the unsolicited agent solicitation message on a traffic channel assigned as a result of the SIP reconnection.

In some embodiments, the method further comprises: initiating a new call to set up a traffic channel, and transmitting the unsolicited agent solicitation message on the traffic channel.

In some embodiments, the method further comprises: waiting until a new call is initiated that results in a new traffic channel being set up, and transmitting the unsolicited agent solicitation message on the traffic channel.

In some embodiments, the method further comprises: if IPCP is not configured as MIP upon initiating the MIP session, falling back to SIP mode and making the MIP support information indicate that MIP was not supported, and falling back to SIP mode; and if IPCP is configured as MIP upon initiating the MIP session, and MIP registration is not successful, making the MIP support information indicate that MIP was not granted, and falling back to SIP mode.

In some embodiments, the method further comprises: detecting a new system by detecting a change in one or more network identifying parameters.

In some embodiments, the method further comprises: putting a time limit on the validity of the MIP support information for each system stored by the wireless device.

According to another broad aspect, the application provides a wireless device adapted to communicate with access networks using a first wireless protocol having geographically dependent addressing and a second wireless protocol having non-geographically dependent addressing, the wireless device being adapted to transition between the first protocol and the second protocol using a method as summarized above.

According to another broad aspect, the application provides a computer readable medium having computer executable instructions stored thereon for execution on a wireless device so as to implement any of the methods as summarized above for transitioning between a first wireless protocol having geographically dependent addressing and a second wireless protocol having non-geographically dependent addressing.

### Brief Description of the Drawings

Preferred embodiments of the application will now be described with reference to the attached drawings in which:
Figure 1 is a block diagram of an example wireless IP network;
Figure 2 is a flowchart of a method of handling simple IP to mobile IP transitions in accordance with an embodiment of the application;
Figure 3 is an example of a visited network list for use with the embodiment of Figure 2; and
Figure 4 is an example block diagram of a mobile device.

### Description of the Preferred Embodiments

The TIA/EIA IS-835 standard does not specify how or whether a mobile station with a SIP session should check for availability of a MIP network. An example of the necessity for such a feature would be the case when a MIP-capable mobile device with a dormant packet data service (e.g. an always-on mobile device) comes back to its home MIP network after it was forced to establish a SIP session on a roaming SIP network. Attempting to establish a MIP session for every data call initiation is not applicable to an "always-on" device which maintains data connectivity all the time. As a result, an "always-on" wireless terminal may get stuck in SIP mode until a power cycle (when the radio on the device is powered off and turned back on).

With MIP, there is a foreign agent in the network being visited by a wireless terminal and a home agent on the wireless terminal's home network. The home agent receives packets for the terminal and forwards these to the foreign agent. The foreign agent checks the home address to COA mapping, and forwards the packets to the wireless terminal upon receipt.

Typically, on a visited network, a PDSN will send a list of different available COAs together with an indication that it is available to function as a foreign agent. This is a so-called "agent advertisement" message. This message is sent after the PPP between the device and the network is set up. The wireless terminal then initiates the MIP registration process by sending a Registration Request message to the foreign agent which includes a selected COA, a home agent address, home IP address and some parameters required for authentication. Once the mobile device is authenticated, the foreign agent sends the MIP Registration Request to the home agent. The home agent responds with a Registration Response message that includes a registration life time and other parameters such as home IP address (if it has not been assigned already). Then, the home and foreign agents establish a tunnel so that the mobile device can be reached by its home IP address.

As per cdma2000 packet data standard (TIA IS-707), a dormant wireless terminal with a PPP (point-to-point protocol) connection is required to "re-connect" its packet data service whenever it detects a change in network parameters such as system ID (SID), network ID (NID) or packet zone ID. In accordance with an embodiment of the application, a MIP-capable mobile device attempts to discover whether a new network to which it is trying to reconnect its dormant packet data session supports MIP or not. It may send an ICMP (Internet Control Message Protocol) Agent solicitation message as part of the re-connect process which does not require any extra data call set-up. In response to this, if the network supports mobile IP, then the network sends an ICMP agent advertisement message even if the wireless terminal is currently in SIP mode. Note the ICMP protocol is common to both SIP and MIP stacks.

In accordance with an embodiment of the application, each wireless terminal maintains a visited network list (VNL) to keep track of some number of visited networks in terms of whether or not MIP was supported and granted during the last visit. The agent solicitation trigger may be partially based on the existing information in the VNL. Advantageously, this may reduce blind attempts to establish MIP sessions where they are not possible. Preferably, the VNL is updated every time the wireless terminal decides to solicit agent advertisement.

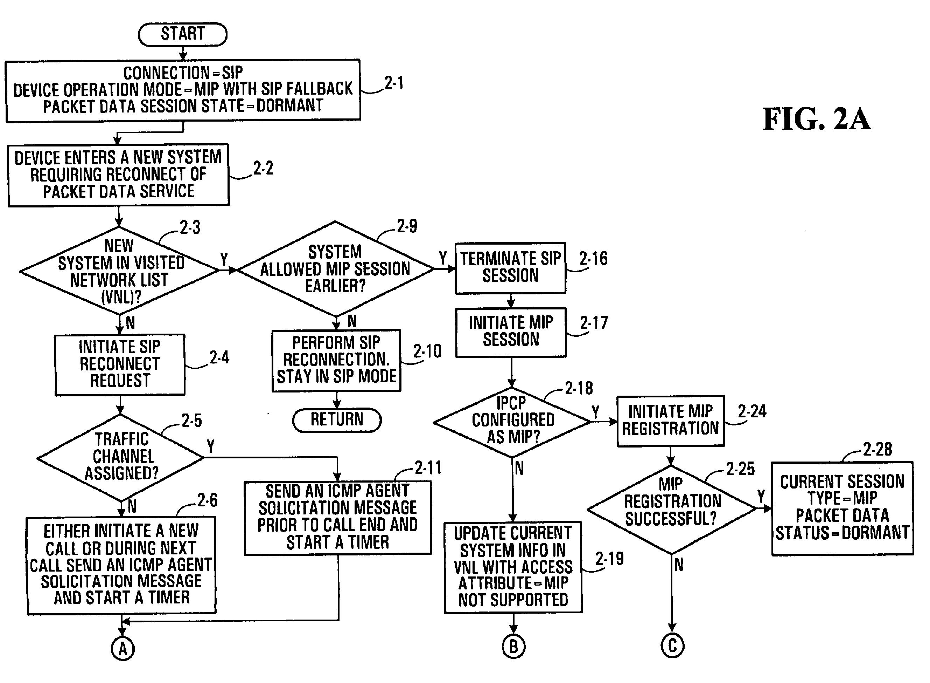

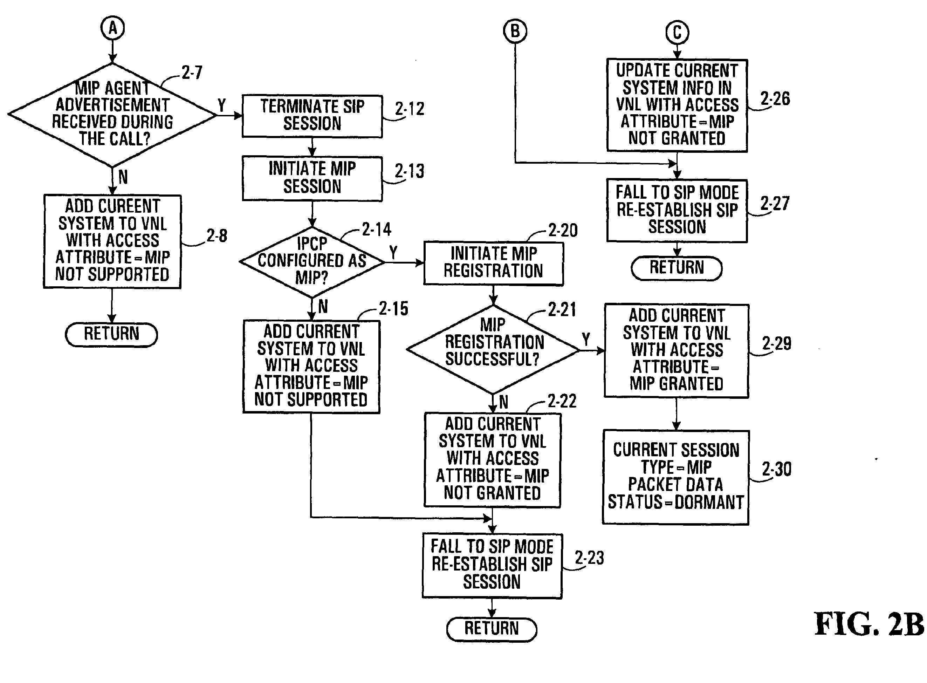

Referring now to Figure 2, shown is a detailed flowchart of a method of handling simple IP to mobile IP transitions in accordance with an embodiment of the application. The method begins at step 2-1 with the session type being SIP and the device operational mode being MIP with SIP fall back. The packet data session state is dormant. At step 2-2, the mobile terminal detects that it has entered a new system requiring re-connect of the packet data service. This is detected by determining that there has been a change in one of more of the system parameters such as the system ID, network ID or packet zone ID to name a few examples.

At step 2-3, the mobile terminal examines its VNL to determine if the new system is in the list. If it is not in the list (no path step 2-3) then at step 2-4 a SIP re-connect request is initiated. If a traffic channel is assigned (yes path step 2-5) then the mobile terminal sends an ICMP agent solicitation message prior to call end and starts a timer. If no traffic channel has been assigned (no path step 2-5) then at step 2-6 the mobile terminal either initiates a new call, or during the next call sends an ICMP agent solicitation message and starts a timer. Then, after either step 2-11 or 2-6, if at step 2-7 an agent advertisement was not received during the call then MIP mode is not available, and the current system is added to the VNL with the access type "MIP not supported" at step 2-8. Note a "call" refers to any origination, for example a voice call. "Connection" on the other hand refers to PPP connectivity or the like.

On the other hand, if a MIP advertisement was received during the call (yes path step 2-7) then the SIP session is terminated at step 2-12. A MIP session set-up is initiated at step 2-13. If the Internet Protocol Control Protocol (IPCP) is configured as MIP as described in IS-835 (yes path step 2-14), then MIP registration is initiated at step 2-20. If MIP registration was successful (yes path step 2-21) then the current system is added to the VNL with the access attribute indicating "MIP granted" at step 2-29. At this point, the current session type is MIP and the packet data status is dormant as indicated at step 2-30. On the other hand, if the IPCP was not configured as MIP (no path step 2-14) then the current system is added to the VNL with an access attribute indicating "MIP not supported". At this point the terminal falls back to SIP mode and attempts to re-establish a SIP session at step 2-23. Similarly, if MIP registration was not successful (no path step 2-21) then the current system is also added to the VNL with the access attribute "MIP not granted" at step 2-22 and the mobile terminal falls back into SIP mode and re-establishes a SIP session at step 2-23. The distinction between step 2-15 and step 2-22 is that in step 2-15 MIP was not supported whereas in step 2-22 MIP was supported but MIP was not granted for the particular access attempt.

Returning now to step 2-3, if the new system is included in the VNL (yes path) then the VNL can be used to determine whether the system allowed a MIP session earlier. If the system did not allow a MIP session earlier (no path step 2-9) then packet data service re-connection is performed at step 2-10 and the mobile terminal stays in SIP mode. On the other hand, if the VNL indicates that the system did allow MIP session earlier (yes path step 2-9) then at step 2-16 the mobile terminates the SIP session. The mobile terminal initiates a MIP session set-up at step 2-17. If the IPCP is configured successfully as MIP as described IS-835 (yes path 2-18) then the mobile terminal attempts to initiate MIP registration at step 2-24. If MIP registration was successful (yes path step 2-25) then the current session type is MIP and the packet data status is dormant as indicated at step 2-28. On the other hand, if MIP registration was unsuccessful (no path step 2-25) then the mobile terminal updates the system information and the VNL to indicate that the access attribute is "MIP not granted" at step 2-26. Also, if the IPCP is not configured as MIP (no path step 2-18), then the system information is updated in the VNL with the access attribute "MIP not supported". After either of steps 2-19 or 2-26 the mobile terminal falls back to SIP mode and attempts to re-establish a SIP session at step 2-27.

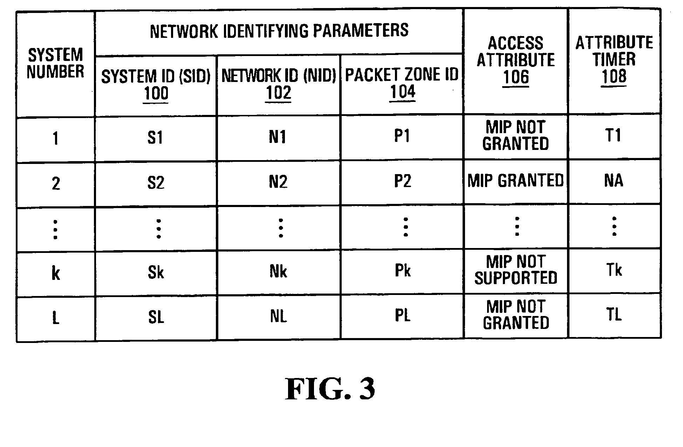

Figure 3 shows an example of the above discussed VNL. The VNL has a number of rows for various systems. Each network has a number of network identifying parameters. In the illustrated example these include system ID 100, network ID 102 and packet zone ID 104. However, it may be that in other implementations a subset of these three parameters or different network identifying parameters may be used. Whenever there is a change in any of the three parameters, the mobile terminal can make the determination that it may be possible to transition from SIP to MIP. The access attribute for the network identified by the network identifying parameters is listed in column 106. The three possible access attributes in the embodiment described above are "MIP not granted", "MIP granted", and "MIP not supported". In the illustrated example there are L systems, and the attribute "MIP not granted" is indicated for System No. 1, the attribute "MIP granted" is indicated for System No. 2 and System No. L, and the attribute "MIP not supported" is indicated for System No. k. Also shown in column 108 is a field for a so-called "attribute timer". In the illustrated example, System Nos. 1, k and L all have timers T1, Tk and TL respectively. These timers are used to indicate how long the access attribute is to be considered valid. Once the attribute timer expires for a given system, it becomes as if the system is not included in the VNL. It is not necessary to run a timer for the systems having a "MIP granted" access attribute.

The timer can be implemented in any suitable manner, the only important feature being that after some time, the mobile will again consider re-attempting MIP even though previously it had failed to establish MIP in a given network.

The VNL is preferably maintained in the mobile terminal in memory. While it may be desirable that the memory be non-volatile memory, this is not essential since if the mobile terminal undergoes a power cycle it will attempt to establish an initial connection in MIP mode and will build up the VNL from scratch again. Similarly, if the wireless component of PDA-type mobile device is turned off, VNL may be erased. Furthermore, while the VNL shown is used in some embodiments, more generally MIP support information is stored in any suitable fashion indicating for each system at least whether or not a MIP session was successfully established or not. In the above example, "MIP not granted" and "MIP not supported" both indicate a failure to establish a MIP session.

In another embodiment, no MIP support information is maintained in any form, and the wireless device attempts MIP every time a new system is detected.

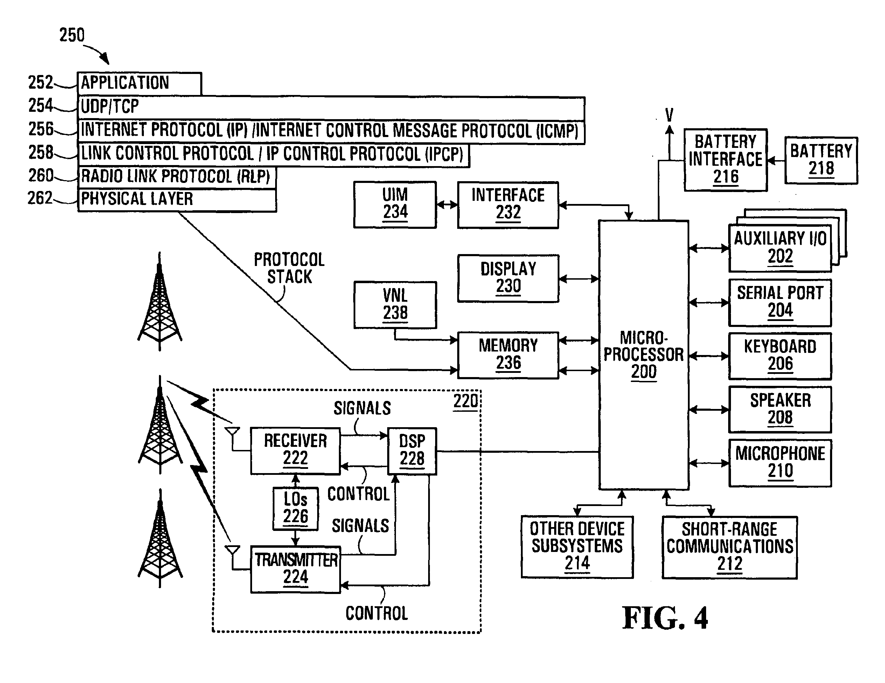

Referring to Figure 4, shown is an example block diagram of a wireless terminal that may be adapted to implement the method of Figures 2 and 3. This is a very specific layout for a wireless terminal and it is to be understood that the application is not limited to this particular device. The device has a microprocessor 200 to which is connected auxiliary I/O 202, serial port 204, keyboard 206, speaker 208 and microphone 210. Short range communications functions are indicated at 212 and other device subsystems at 214. A battery interface is indicated at 216 and the battery itself at 218. The microprocessor 200 is connected to transceiver 220 which has a receiver 222 and transmitter 224 driven by local oscillators 226. A DSP 228 is shown in communication with both the receiver 222 and the transmitter 224. Also shown is a display 230 and an interface 232 to a User Identity Module (UIM) 234. Finally, shown is a memory 236 within which is stored the VNL 238 which might take the form of the VNL shown in Figure 3 by way of example.

The functionality of the mobile device for communications purposes can be broken down using the OSI protocol stack. This is indicated generally at 250 which shows the application layer 252 on top below which is located the UDP/TCP layer 254, the Internet protocol/ICMP protocol 256, the link control protocol/IP control protocol (IPCP) 258, the radio link protocol (RLP) 260 and finally the physical layer 262. Preferably, the functionality which decides whether or not to attempt to set up a MIP session versus a SIP session, as described above with reference to Figures 2 and 3, is implemented as part of the network determination component of physical layer software running on the mobile terminal. However, it is to be understood that more generally the functionality could be implemented in any appropriate manner on a wireless terminal and not limited to the physical layer 262.

The embodiments described above have focussed on transitioning between SIP and MIP. More generally, other embodiments are applicable for transitioning between a first wireless protocol having geographically dependent addressing and a second wireless protocol having non-geographically dependent addressing while in a state during which link layer connectivity (e.g. PPP) is maintained for a packet data service but a radio link has been torn down, the Dormant state being an example of this. In some embodiments, the first and second wireless protocols are IP protocols. Particular examples of these IP protocols are SIP and MIP respectively. For some IP implementations, the link layer connectivity may be PPP or PPP-like connectivity. Other implementations may feature different link layer functionality.

In yet another embodiment, the method is applicable when the wireless device is involved in active communications for the packet data service, i.e. the device is not dormant, so the link layer connectivity is present, and the radio link is not torn down. For example, a handoff may occur from a network allowing only SIP to a network allowing MIP, and the method can be employed to detect the MIP capability and to re-establish the session as a MIP session.

Another embodiment provides a computer readable medium having computer executable instruction stored thereon for instructing a wireless device to implement any of the methods described herein.

Numerous modifications and variations of the present application are possible in light of the above teachings. It is therefore to be understood that within the scope of the appended claims, the application may be practised otherwise than as specifically described herein.

## Claims

1. A method for transitioning between a first wireless protocol having geographically dependent addressing and a second wireless protocol having non-geographically dependent addressing, the method comprising:
a wireless device detecting a new system requiring reconnect of a packet data service while in a state during which link layer connectivity is maintained for a packet data service;
at least a first time the wireless device detects the new system, the wireless device attempting to establish a session using the second wireless protocol with the new system; and
if the session using the second wireless protocol is established, the wireless device terminating use of the first wireless protocol thereby transitioning to the second wireless protocol.

2. A method according to claim 1 executed only if the mobile device is in the state during which link layer connectivity for a packet data service is maintained and a radio link has been torn down.

3. The method of claim 1 or claim 2 wherein the first and second wireless protocols comprise a first wireless IP protocol and a second wireless IP protocol respectively.

4. The method of claim 3 wherein the first wireless protocol comprises SIP, simple IP and the second wireless protocol comprises MIP, mobile IP.

5. A method of claim 4 further comprising:
the wireless device storing MIP support information for each new system detected, the MIP support information indicating whether or not a MIP session was established;
upon the wireless device detecting a new system requiring reconnect of a packet data service:
the wireless device checking to see if MIP support information was previously stored in respect of the new system;
if there is MIP support information indicating a MIP session was established during a previous visit to the new system, the wireless device attempting to establish a MIP session with the new system; and
if there is MIP support information indicating a MIP session was not established during a previous visit to the new system, the wireless device attempting to establish a SIP session with the new system.

6. A method of claim 5 further comprising, if there is no MIP support information stored for the new system:
initiating a SIP reconnect request to establish a SIP session;
transmitting an unsolicited agent solicitation;
if a MIP agent advertisement is received in response to the unsolicited agent solicitation, terminating the SIP session and initiating (2-13) a MIP session; and
adding a record in respect of the new system to indicate whether or not a MIP session was established.

7. A method according to claim 6 further comprising:
transmitting the unsolicited agent solicitation message on a traffic channel assigned as a result of the SIP reconnection.

8. A method according to claim 6 further comprising:
initiating a new call to set up a traffic channel, and transmitting the unsolicited agent solicitation message on the traffic channel.

9. A method according to claim 6 further comprising:
waiting until a new call is initiated that results in a new traffic channel being set up, and transmitting the unsolicited agent solicitation message on the traffic channel.

10. A method according to claim 6 further comprising:
if Internet Protocol Control Protocol is not configured as MIP upon initiating the MIP session, making the MIP support information indicate that MIP was not supported, and falling back to SIP mode; and
if Internet Protocol Control Protocol is configured (2-14) as MIP upon initiating the MIP session, and MIP registration is not successful, making the MIP support information indicate that MIP was not granted, and falling back to SIP mode.

11. A method according to any one of claims 1 to 10 further comprising:
detecting a new system by detecting a change in one or more network identifying parameters.

12. A method according to any one of claims 3 to 10 further comprising:
putting a time limit on the validity of the MIP support information for each system stored by the wireless device.

13. A wireless device (220, 250, 200, 236, 238, 230, 232, 234, 216, 218, 202, 204, 206, 208, 210, 212, 214) adapted to communicate with access networks using a first wireless protocol having geographically dependent addressing and a second wireless protocol having non-geographically dependent addressing, the wireless device including means being adapted to carry out the steps a method according to any one of claim 1 to 12 for transitioning between the first protocol and the second protocol.

14. A computer readable medium (236, 238, 250) having computer executable instructions stored thereon for execution on a wireless device so as to implement computer program means for carrying out the steps, a method according to any one of claims 1 to 12 for transitioning between a first wireless protocol having geographically dependent addressing and a second wireless protocol having non-geographically dependent addressing.

## Patentansprüche

1. Verfahren zum Behandeln des Übergangs zwischen einem ersten Drahtlosprotokoll mit geografisch abhängiger Adressierung und einem zweiten Drahtlosprotokoll mit nicht-geografisch abhängiger Adressierung, wobei das Verfahren umfasst:
das Erkennen eines neuen Systems durch ein Drahtlosgerät, das eine Neuverbindung eines Paketdatendienstes erfordert, während es sich in einem Status befindet, in dessen Verlauf die Link-Layer-Konnektivität für einen Paketdatendienst beibehalten wird;
zumindest ein erstes Mal, wenn das Drahtlosgerät das neue System erkennt, das Versuchen durch das Drahtlosgerät, eine Sitzung unter Verwendung des zweiten Drahtlosprotokolls mit dem neuen System herzustellen; und
wenn die Sitzung unter Verwendung des zweiten Drahtlosprotokolls hergestellt ist, durch das Drahtlosgerät das Beenden der Verwendung des ersten Drahtlosprotokolls und damit das Übergehen zu dem zweiten Drahtlosprotokoll.

2. Verfahren gemäß Anspruch 1, das nur dann ausgeführt wird, wenn sich das Mobilgerät in dem Status befindet, in dessen Verlauf die Link-Layer-Konnektivität für einen Paketdatendienst beibehalten wird und eine Funkverbindung abgebaut wurde.

3. Verfahren gemäß Anspruch 1 oder Anspruch 2, wobei das erste und das zweite Drahtlosprotokoll ein erstens Drahtlos-IP-Protokoll bzw. ein zweites Drahtlos-IP-Protokoll umfassen.

4. Verfahren gemäß Anspruch 3, wobei das erste Drahtlosprotokoll SIP (Simple IP) umfasst und das zweite Drahtlosprotokoll MIP (Mobile IP) umfasst.

5. Verfahren gemäß Anspruch 4, des Weiteren umfassend:
durch das Drahtlosgerät das Speichern von MIP-Unterstützungsinformationen für jedes erkannte neue System, wobei die MIP-Unterstützungsinformationen angeben, ob eine MIP-Sitzung hergestellt wurde oder nicht;
beim Erkennen eines neuen Systems durch das Drahtlosgerät, das eine Neuverbindung eines Paketdatendienstes erfordert:
durch das Drahtlosgerät das Überprüfen, um festzustellen, ob in Bezug auf das neue System bereits zuvor MIP-Unterstützungsinformationen gespeichert wurden;
wenn es Unterstützungsinformationen gibt, die angeben, dass während eines vorherigen Besuchs im neuen System eine MIP-Sitzung hergestellt wurde, durch das Drahtlosgerät das Versuchen, eine MIP-Sitzung mit dem neuen System herzustellen; und
wenn es Unterstützungsinformationen gibt, die angeben, dass während eines vorherigen Besuchs im neuen System keine MIP-Sitzung hergestellt wurde, durch das Drahtlosgerät das Versuchen, eine SIP-Sitzung mit dem neuen System herzustellen.

6. Verfahren gemäß Anspruch 5, des Weiteren umfassend, wenn es keine gespeicherten MIP-Unterstützungsinformationen für das neue System gibt:
das Initiieren einer SIP-Neuverbindungsanforderung zum Herstellen einer SIP-Sitzung;
das Übertragen einer Unsolicited Agent Solicitation;
wenn ein MIP Agent Advertisement als Reaktion auf die Unsolicited Agent Solicitation empfangen wird, das Beenden der SIP-Sitzung und das Initiieren (2-13) einer MIP-Sitzung; und
das Hinzufügen eines Datensatzes in Bezug auf das neue System, um anzugeben, ob eine MIP-Sitzung hergestellt wurde oder nicht.

7. Verfahren gemäß Anspruch 6, des Weiteren umfassend:
das Übertragen der Unsolicited Agent Solicitation-Meldung auf einem Verkehrskanal, der im Ergebnis der SIP-Neuverbindung zugewiesen wird.

8. Verfahren gemäß Anspruch 6, des Weiteren umfassend:
das Initiieren eines neuen Anrufs zum Einrichten eines Verkehrskanals, und
das Übertragen der Unsolicited Agent Solicitation-Meldung auf dem Verkehrskanal.

9. Verfahren gemäß Anspruch 6, des Weiteren umfassend:
das Warten, bis ein neuer Anruf initiiert wurde, der zum Einrichten eines neuen Verkehrskanals führt, und das Übertragen der Unsolicited Agent Solicitation-Meldung auf dem Verkehrskanal.

10. Verfahren gemäß Anspruch 6, des Weiteren umfassend:
wenn das Internet Protocol Control Protocol beim Initiieren der MIP-Sitzung nicht als MIP konfiguriert ist, das Bewirken, dass die MIP-Unterstützungsinformationen angeben, dass MIP nicht unterstützt wurde, und das Zurückfallen in den SIP-Modus; und
wenn das Internet Protocol Control Protocol beim Initiieren der MIP-Sitzung als MIP konfiguriert ist (2-14) und die MIP-Registrierung nicht erfolgreich ist, das Bewirken, dass die MIP-Unterstützungsinformationen angeben, dass MIP nicht gestattet wurde, und das Zurückfallen in den SIP-Modus.

11. Verfahren gemäß jedem der Ansprüche 1 bis 10, des Weiteren umfassend:
das Erkennen eines neuen Systems durch das Erkennen einer Änderung in einem oder mehreren Netzidentifizierungsparametern.

12. Verfahren gemäß jedem der Ansprüche 3 bis 10, des Weiteren umfassend:
das Festlegen eines Zeitlimits für die Gültigkeit der MIP-Unterstützungsinformationen für jedes durch das Drahtlosgerät gespeicherte System.

13. Drahtlosgerät (220, 250, 200, 236, 238, 230, 232, 234, 216, 218, 202, 204, 206, 208, 210, 212, 214), das für die Kommunikation mit Zugangsnetzen unter Verwendung eines ersten Drahtlosprotokolls mit geografisch abhängiger Adressierung und eines zweiten Drahtlosprotokolls mit nicht-geografisch abhängiger Adressierung ausgelegt ist, wobei das Drahtlosgerät Mittel einschließt, die so ausgelegt sind, dass sie die Schritte eines Verfahrens gemäß jedem der Ansprüche 1 bis 12 ausführen, um den Übergang zwischen dem ersten Protokoll und dem zweiten Protokoll zu behandeln.

14. Computerlesbares Medium (236, 238, 250), auf dem durch Computer ausführbare Anweisungen gespeichert sind, die auf einem Drahtlosgerät ausgeführt werden können, damit Computerprogrammmittel implementiert werden, um die Schritte eines Verfahrens gemäß jedem der Ansprüche 1 bis 12 auszuführen, mit dem der Übergang zwischen einem ersten Drahtlosprotokoll mit geografisch abhängiger Adressierung und einem zweiten Drahtlosprotokoll mit nicht-geografisch abhängiger Adressierung behandelt wird.

## Revendications

1. Procédé permettant d'effectuer la transition entre un premier protocole sans fil ayant un adressage géographiquement dépendant et un second protocole sans fil ayant un adressage non géographiquement dépendant, le procédé comprenant :
un dispositif sans fil détectant un nouveau système nécessitant la reconnexion d'un service de paquets de données lorsqu'il est dans un état dans lequel la connectivité de la couche de liaison est maintenue pour un service de paquets de données ;
au moins une première fois le dispositif sans fil détecte le nouveau système, le dispositif sans fil tentant d'établir une session en utilisant le second protocole sans fil avec le nouveau système ; et
si la session utilisant le second protocole sans fil est établie, le dispositif sans fil met un terme à l'utilisation du premier protocole sans fil, opérant ainsi la transition vers le second protocole sans fil.

2. Procédé selon la revendication 1, exécuté uniquement si le dispositif mobile est dans l'état dans lequel la connectivité de la couche de liaison pour un service de paquets de données est maintenue et une liaison hertzienne a été démontée.

3. Procédé selon la revendication 1 ou la revendication 2, dans lequel le premier et le second protocoles sans fil sont constitués respectivement par un premier protocole IP sans fil et un second protocole IP sans fil.

4. Procédé selon la revendication 3, dans lequel le premier protocole sans fil est constitué par un SIP, IP simple, et le second protocole sans fil est constitué par un MIP, IP mobile.

5. Procédé selon la revendication 4, comprenant en outre :
le dispositif sans fil stockant des informations de support de MIP pour chaque nouveau système détecté, les informations de support de MIP indiquant si oui ou non une session MIP a été établie ;
lorsque le dispositif sans fil détecte un nouveau système nécessitant une reconnexion d'un service de paquets de données :
le dispositif sans fil vérifie si des informations de support de MIP ont été préalablement stockées en ce qui concerne le nouveau système ;
s'il existe des informations de support de MIP indiquant qu'une session MIP a été établie pendant une visite précédente sur le nouveau système, le dispositif sans fil tente d'établir une session MIP avec le nouveau système ; et
s'il existe des informations de support de MIP indiquant qu'une session MIP n'a pas été établie pendant une visite précédente sur le nouveau système, le dispositif sans fil tente d'établir une session SIP avec le nouveau système.

6. Procédé selon la revendication 5 comprenant en outre, s'il n'y a pas d'informations de support MIP stockées pour le nouveau système :
le déclenchement d'une demande de reconnexion SIP afin d'établir une session SIP ;
la transmission d'une sollicitation d'agent non sollicité ;
si une publicité d'agent MIP est reçue en réponse à la sollicitation d'agent non sollicité, l'interruption de la session SIP et le déclenchement (2-13) d'une session MIP ; et
l'ajout d'un enregistrement concernant le nouveau système pour indiquer si une session MIP a ou non été établie.

7. Procédé selon la revendication 6, comprenant en outre :
la transmission du message de sollicitation d'agent non sollicité sur un canal de trafic attribué en conséquence de la reconnexion SIP.

8. Procédé selon la revendication 6, comprenant en outre :
le déclenchement d'un nouvel appel pour installer un canal de trafic et la transmission du message de sollicitation d'agent non sollicité sur le canal de trafic.

9. Procédé selon la revendication 6, comprenant en outre :
l'attente jusqu'à ce qu'un nouvel appel soit déclenché, entraînant l'installation d'un nouveau canal de trafic, et la transmission du message de sollicitation d'agent non sollicité sur le canal de trafic.

10. Procédé selon la revendication 6, comprenant en outre :
si le protocole de contrôle de protocole Internet n'est pas configuré comme un MIP lors du déclenchement de la session MIP, le signalement par les informations de support de MIP que le MIP n'était pas supporté et revenir au mode SIP ; et
si le protocole de contrôle de protocole Internet est configuré (2-14) comme un MIP lors du déclenchement de la session MIP et que l'enregistrement MIP échoue, le signalement par les informations de support de MIP que le MIP n'a pas été accordé et revenir au mode SIP.

11. Procédé selon l'une quelconque des revendications 1 à 10, comprenant en outre :
la détection d'un nouveau système par détection d'un changement d'un ou plusieurs paramètres identificateurs de réseau.

12. Procédé selon l'une quelconque des revendications 3 à 10, comprenant en outre :
la fixation d'une limite de temps sur la validité des informations de support de MIP pour chaque système stocké par le dispositif sans fil.

13. Dispositif sans fil (220, 250, 200, 236, 238, 230, 232, 234, 216, 218, 202, 204, 206, 208, 210, 212, 214) conçu pour communiquer avec des réseaux d'accès utilisant un premier protocole sans fil ayant un adressage géographiquement dépendant et un second protocole sans fil ayant un adressage non géographiquement dépendant, le dispositif sans fil comprenant des moyens conçus pour exécuter les étapes d'un procédé selon l'une quelconque des revendications 1 à 12 afin d'opérer une transition entre le premier protocole et le second protocole.

14. Support lisible par ordinateur (236, 238, 250) sur lequel sont stockées des instructions exécutables par ordinateur destinées à être exécutées sur un dispositif sans fil de manière à mettre en oeuvre un moyen de programmation d'ordinateur destiné à exécuter les étapes d'un procédé selon l'une quelconque des revendications 1 à 12 pour opérer une transition entre un premier protocole sans fil ayant un adressage géographiquement dépendant et un second protocole sans fil ayant un adressage non géographiquement dépendant.
